(19) Europäisches Patentamt
European Patent Office
Office européen des brevets

(11) Veröffentlichungsnummer : **0 011 245**
**B1**

(12) # EUROPÄISCHE PATENTSCHRIFT

(45) Veröffentlichungstag der Patentschrift : **14.09.83**

(51) Int. Cl.$^3$ : **C 07 F 9/32**, C 07 F 9/53

(21) Anmeldenummer : **79104393.8**

(22) Anmeldetag : **08.11.79**

(54) **Verfahren zur Herstellung von phosphorhaltigen Cyanhydrinderivaten und diese Cyanhydrinderivate.**

(30) Priorität : **11.11.78 DE 2849003**

(43) Veröffentlichungstag der Anmeldung : **28.05.80 Patentblatt 80/11**

(45) Bekanntmachung des Hinweises auf die Patenterteilung : **14.09.83 Patentblatt 83/37**

(84) Benannte Vertragsstaaten : **AT BE CH DE FR GB IT NL**

(56) Entgegenhaltungen :
**DE A 2 717 140**
**FR A 2 321 484**

**Houben-Weyl, org. Phophorverbindungen Teil 1, 1963, S. 153**

**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Finke, Manfred, Dr.**
**Behringstrasse 25**
**D-6233 Kelkheim (Taunus) (DE)**
Erfinder : **Mündnich, Rainer, Dr.**
**Schreyerstrasse 11**
**D-6000 Frankfurt am Main 70 (DE)**

**EP 0 011 245 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von phosphorhaltigen Cyanhydrinderivaten und diese Cyanhydrinderivate

Die Erfindung betrifft die Herstellung von Zwischenprodukten für die Synthese von Phosphinotricin (PTC), einem 1972 aufgefundenen Antibiotikum mit ausgezeichneten totalherbiziden Eigenschaften. Verfahren zur Herstellung von PTC

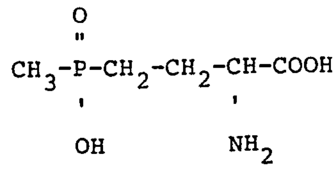

sind aus zahlreichen wissenschaftlichen Veröffentlichungen und Patentanmeldungen bekannt. (E. Bayer et al. Helv. Chim. Acta *55,* 229 ff (1972) ; Japan Kakai Sho-48-091019 ; E. Gruszecka et al., Rosz. Chem. *49,* 2127 (1975) ; H. Gross, Th. Gnauk, J. prakt. Chemie *318,* 157 (1976)). Die Ausbeuten an Phosphinotricin nach diesen Syntheseverfahren sind jedoch sämtlich unbefriedigend.

Mit Hilfe der Verbindungen der Formel I können nun Phosphinotricin bzw. dessen Derivate in wesentlich höherer Gesamtausbeute erhalten werden. Erfindungsgemäß werden hierbei zunächst als Zwischenverbindungen die neuen phosphorhaltigen Cyanhydrinderivate der unten angegebenen Formel I in hoher Ausbeute synthetisiert ; diese Verbindungen können nach üblichen Verfahren, wie weiter unten ausgeführt wird, in hoher Ausbeute in das Phosphinotricin Überführt werden. Das erfindungsgemäße Verfahren zur Herstellung von Verbindungen der Formel I

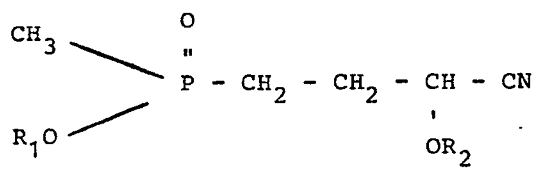

(I)

worin

$R_1$ = ($C_1$-$C_6$)-Alkyl und

$R_2$ = Wasserstoff, Acetyl oder Propionyl

bedeuten, ist dadurch gekennzeichnet, daß man Verbindungen der allgemeinen Formel II

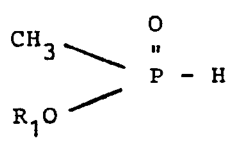

(II)

mit Verbindungen der allgemeinen Formel III

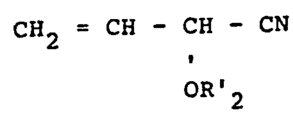

(III)

worin $R_{2'}$ = Acetyl oder Propionyl bedeutet, in Gegenwart katalytischer Mengen von Radikalbildnern umsetzt und gewünschtenfalls in den erhaltenen Verbindungen den Rest $R'_2$ in an sich bekannter Weise abspaltet.

Als Verbindungen der Formel II kommen z. B. in Frage : Methanphosphonigsäuremono-methylester, -ethylester, -propylester, -butylester, -isobutylester oder -hexylester.

Die Herstellung derartiger Phosphonigsäuremonoester ist bekannt [Houben-Weyl XII/1, S. 193, 212, 320, 331 (1963)].

Verbindungen der allgemeinen Formel III sind zum Teil literaturbekannt oder können nach literaturbekannten Verfahren hergestellt werden [Bull. soc. chim. (5), 1, 1317 (1934) ; Rec. Trav. Chim. Pays-Bas *21,* 210 (1902) ; Acta Chem. Scandinavica *19,* 242 (1965) ; J. Org. Chem. *42,* 3956 (1977) und J.F.W. McOmie « Protective Groups in Organic Chemistry » Plenum Press, London 1973, S. 95 ff].

Als Radikalbildner kommen alle im Temperaturbereich von 50 bis 250 °C, vorzugsweise 100-180 °C Radikale erzeugenden Verbindungen in Frage. Beispiele für solche Katalysatoren sind :

Di-t-butylperoxid, Dipropionylperoxid, Dibenzoylperoxid, p-Chlorbenzoylperoxid, Lauroylperoxid, t-Butylperisobutyrat, t-Butylperoctoat, t-Butylperisononanat, t-Butylperacetat, t-Butylperpropionat, t-Butylperbenzoat, Azobisisobutyronitril, tert. Butylhydroperoxid und Cumolhydroperoxid.

Anstelle dieser Radikalbildner können auch radialbildende Strahlungsquellen (UV-, γ- oder Röntgenstrahlen) verwendet werden.

Das erfindungsgemäße Verfahren wird im allgemeinen in der Weise durchgeführt, daß in die vorgelegte Phosphorverbindung der allgemeinen Formel II das ungesättigte Cyanhydrinderivat der Formel III eingetropft wird. Zur Vermeidung unerwünschter Nebenreaktionen und damit zur Erzielung hoher Ausbeuten ist es vorteilhaft, die Phosphorwasserstoff-Verbindung II im Überschuß einzusetzen. Vorzugsweise arbeitet man ohne Lösungsmittel ; wo dies gewünscht wird, kann man jedoch auch hochsiedende Lösungsmittel wie Toluol, Xylol, Chlorbenzol, Dioxan oder Dimethylformamid einsetzen.

Der Katalysator, der auch aus einem Gemisch von zwei oder mehreren der angegebenen Radikalbildnern bestehen kann, wird im allgemeinen zusammen mit dem ungesättigten Cyanhydrinderivat III in einer Menge von 0,1 bis 10 Molprozent, vorzugsweise von 0,5 bis 5 Molprozent, bezogen auf das Cyanhydrinderivat III, verwendet. Er kann jedoch auch zusammen mit der Phosphorverbindung II vorgelegt werden oder, ggf. in einem inerten Lösungsmittel bzw. vermischt mit einem vorweggenommenen Teil der Phosphorverbindung II, gleichzeitig mit dem Cyanhydrinderivat III in das Reaktionsgefäß eingetropft werden.

Die Reaktionstemperaturen betragen etwa 50 bis 250 °C, vorzugsweise 100 bis 180 °C. Die Reaktionsdauer kann in weiten Grenzen variiert werden und beträgt je nach Temperatur, Versuchsanordnung und Größenordung des Ansatzes 0,5 bis 24 Stunden.

Normalerweise wird das Verfahren bei Atmosphärendruck durchgeführt, es kann aber auch bei erhöhtem Druck gearbeitet werden. Ein Schutzgas, wie z. B. Stickstoff oder Argon, ist für das Gelingen der Reaktion nicht erforderlich, jedoch empfiehlt es sich aus Sicherheitsgründen, unter einer Inertgasatmosphäre zu arbeiten.

Das Verfahren kann kontinuierlich oder diskontinuierlich durchgeführt werden. Die Umsetzung liefert die Verbindungen der Formel I mit $R_2 \neq H$ in guten Ausbeuten. Nicht verbrauchte Anteile der Phosphorverbindung II können leicht, z. B. durch Destillation zurückgewonnen und ohne weitere Reinigung erneut in das Verfahren eingesetzt werden. Die Reaktionsprodukte fallen im allgemeinen nach Abdestillieren der überschüssigen Phosphorverbindung II als Flüssigkeiten an, die z. B. durch Destillation unter vermindertem Druck weiter gereinigt werden können. Auf eine Reinigung der rohen phosphorhaltigen Cyanhydrinderivate kann verzichtet werden, wenn sie als Zwischenprodukte einer weiteren Umsetzung zugeführt werden sollen.

Gewünschtenfalls kann auch die in $R_2$-Stellung befindliche Schutzgruppe durch saure Verseifung wieder abgespalten werden (McOmie, « Protective Groups in Organic Chemistry », London 1973).

Die nach dem erfindungsgemäßen Verfahren hergestellten Verbindungen der allgemeinen Formel I stellen eine neue Verbindungsklasse dar und sind ebenfalls Gegenstand der vorliegenden Erfindung. Sie sind wertvolle Zwischenprodukte zur Herstellung von biologisch aktiven Verbindungen, wie insbesondere von Phosphinotricin. Diese können aus den erfindungsgemäßen Verbindungen nach üblichen Verfahren bspw. dadurch hergestellt werden, daß man die freien Cyanhydrine der Formel I in die Aminonitrile überführt und diese dann sauer oder basisch verseift. Ausgehend von $CH_3PCl_2$ kann nun Phosphinotricin nach folgendem Schema in einer Gesamtausbeute von über 70 % erhalten werden :

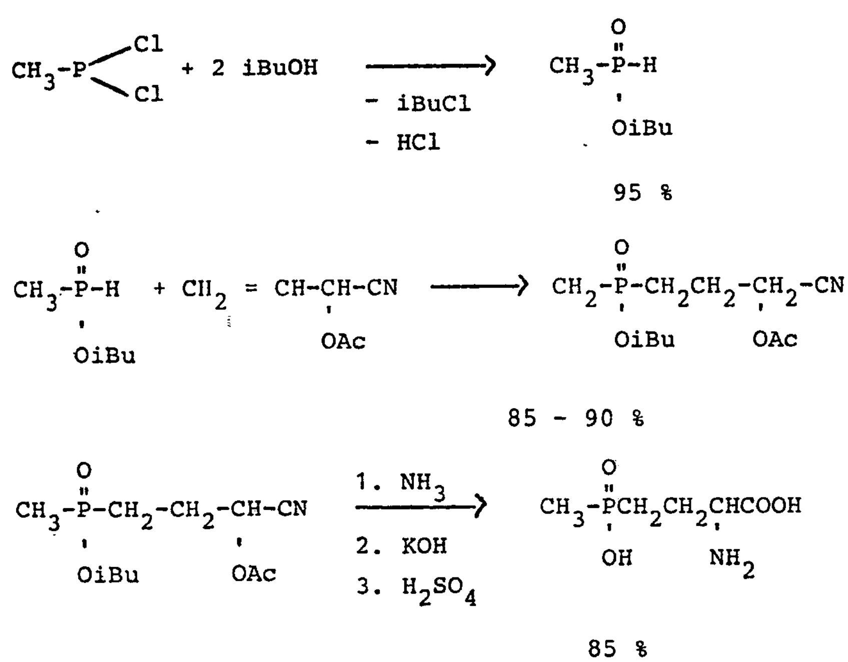


Gesamtausbeute : 70-75 %

Beispiel 1

(3-Acetoxi-3-cyano-propyl)-methyl-phosphinsäuremethylester

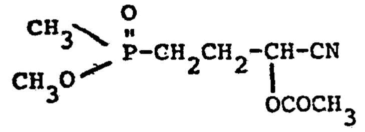

80 g Methanphosphonigsäuremonomethylester werden unter Stickstoffschutzgas auf 115 °C erwärmt. Unter lebhaftem Rühren tropft man in ca. 1 Stunde 36 g Acroleincyanhydrinacetat ein, das 2 g t-Butylperoctoat enthält. Nach beendetem Zutropfen wird 15 min bei 120 °C nachgerührt, und anschließend die Reaktionslösung unter vermindertem Druck fraktioniert destilliert. Man erhält 58 g (3-Acetoxi-3-cyano-propyl)-methyl-phosphinsäuremethylester vom Kp. : 160 °C/0,27 mbar, entsprechend einer Ausbeute von 92 % d. Th.

Analyse : $C_8H_{14}O_4NP$ (M = 219,2)

ber. C 43,8 % ; H 6,4 % ; N 6,4 % ; P 14,1 %.

gef. C 42,5 % ; H 6,4 % ; N 6,6 % ; P 14,7 %.

Beispiel 2

(3-Acetoxi-3-cyano-propyl)-methyl-phosphinsäureethylester

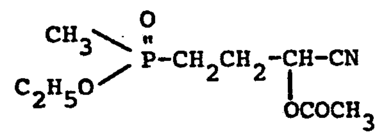

110 g Methanphosphonigsäuremonoethylester werden unter Stickstoffschutzgas auf 140 °C erwärmt. Unter lebhaftem Rühren tropft man in ca. 1 Stunde 50 g Acroleincyanhydrinacetat ein, das eine Mischung von 2 g t-Butylperoctoat und 1 g t-Butylperbenzoat enthält. Nach beendetem Zutropfen wird 15 Min bei 140 °C nachgerührt. Anschließend wird der überschüssige Methanphosphonigsäuremonoethylester unter vermindertem Druck abdestilliert und danach der Rückstand unter Hochvakuum fraktioniert. Man erhält 77 g (3-Acetoxi-3-cyano-propyl)-methyl-phosphinsäureethylester vom Kp. : 150 °C/0,27 mbar, entsprechend einer Ausbeute von 83 % d. Th.

Analyse : $C_9H_{16}O_4NP$ (M = 233,2)

ber. C 46,4 % ; H 6,9 % ; N 6,0 % ; P 13,3 %.

gef. C 45,4 % ; H 6,9 % ; N 6,0 % ; P 13,5 %.

Beispiel 3

(3-Acetoxi-3-cyano-propyl)-methyl-phosphinsäureisobutylester

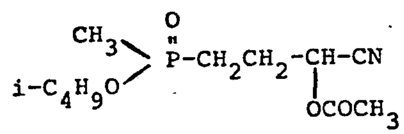

A) Zu 110 g Methanphosphonigsäuremonoisobutylester wird bei 120-125 °C unter Stickstoffschutzgas innerhalb von 1 Stunde 50 g Acroleincyanhydrinacetat getropft, das 4 g t-Butylperoctoat enthält. Nach beendetem Zutropfen wird 15 min bei 120 °C nachgerührt und anschließend unter Hochvakuum fraktioniert destilliert. Man erhält 93 g (3-Acetoxi-3-cyanopropyl)-methylphosphinsäureisobutylester vom Kp : 168-172 °C/0,66 mbar, entsprechend einer Ausbeute von 89,5 % d. Th.

Analyse : $C_{11}H_{20}O_4NP$ (M = 261,3)

ber. C 50,5 % ; H 7,7 % ; N 5,4 % ; P 11,9 %.

gef. C 49,5 % ; H 7,7 % ; N 5,5 % ; P 12,1 %.

B) 110 g Methanphosphonigsäuremonoisobutylester werden unter Stickstoffschutzgas auf 140 °C erwärmt. Unter lebhaftem Rühren werden in ca. 1 Stunde 50 g Acroleincyanhydrinacetat eingetropft, das eine Mischung von 2 g t-Butylperoctoat und 1 g t-Butylperbenzoat enthält. Nach beendetem Zutropfen

wird 15 min bei 140 °C nachgerührt. Anschließend trennt man den überschüssigen Methanphosphonigsäuremonoisobutylester unter vermindertem Druck ab und destilliert den Rückstand unter Hochvakuum. Man erhält 90 g (3-Acetoxi-3-cyanopropyl)-methyl-phosphinsäureisobutylester vom Kp. : 168-172 °C/0,66 mbar, entsprechend einer Ausbeute von 87 % d. Th.

C) Zu 110 g Methanphosphonigsäuremonoisobutylester werden bei 130-135 °C in ca. 1 Stunde 50 g Acroleincyanhydrinacetat getropft, das 4 g t-Butylperoctoat enthält. Es wird noch 15 min bei 130 °C nachgerührt und anschließend unter Hochvakuum destilliert. Man erhält 92 g (3-Acetoxi-3-cyano-propyl)-methyl-phosphinsäureisobutylester vom Kp. : 168-172 °C/0,66 mbar, entsprechend einer Ausbeute von 89 % d. Th.

D) 89 g Methanphosphonigsäuremonoisobutylester werden unter Stickstoffschutzgas auf 115 °C erwärmt. Unter lebhaftem Rühren tropft man in ca. 1 Stunde 50 g Acroleincyanhydrinacetat zu, das 4 g t-Butylperoctoat enthält. Nach beendetem Zutropfen wird noch 15 min bei 120 °C nachgerührt. Anschließend der überschüssige Methanphosphonigsäuremonoisobutylester unter vermindertem Druck entfernt, und danach der Rückstand unter Hochvakuum destilliert. Man erhält 91 g (3-Acetoxi-3-cyano-propyl)-methyl-phosphinsäureisobutylester vom Kp. : 166-172 °C/0,66 mbar, entsprechend einer Ausbeute von 87 % d. Th.

E) 110 g Methanphosphonigsäuremonoisobutylester werden unter Stickstoffschutzgas auf 145 °C erwärmt. Unter lebhaftem Rühren tropft man in ca. 1 Stunde 50 g Acroleincyanhydrinacetat zu, das 4 g t-Butylpernonoat enthält. Nach beendetem Zutropfen wird noch 15 min bei 140 °C nachgerührt. Anschließend wird überschüssiger Methanphosphonigsäuremonoisobutylester unter vermindertem Druck abdestilliert und danach der Rückstand unter Hochvakuum fraktioniert. Bei 166-172 °C/0,66 mbar destillieren 88 g (3-Acetoxi-3-cyano-propyl)-methyl-phosphinsäureisobutylester, entsprechend einer Ausbeute von 84,5 % d. Th.

F) 914 g Methanphosphonigsäuremonoisobutylester werden unter Stickstoffschutzgas auf 115 °C erwärmt. Unter lebhaftem Rühren tropft man in ca. 2 Stunden 250 g Acroleincyanhydrinacetat zu, das 8 g t-Butylperoctoat enthält. Nach beendetem Zutropfen wird noch 15 min bei 120 °C nachgerührt und anschließend der überschüssige Methanphosphonigsäuremonoisobutylester bis zu einer Badtemperatur von 175 °C unter vermindertem Druck abdestilliert. Den Rückstand destilliert man bei 0,66 mbar über einen Dünnschichtverdampfer. Man erhält 513 g (3-Acetoxi-3-cyano-propyl)-methyl-phosphinsäureisobutylester, entsprechend einer Ausbeute von 98 % d. Th.

Beispiel 4

(3-Propionyloxi-3-cyano-propyl)-methylphosphinsäureisobutylester

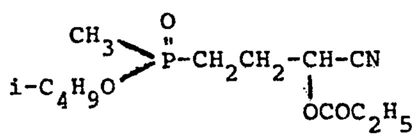

110 g Methanphosphonigsäuremonoisobutylester werden unter Stickstoffschutzgas auf 125 °C erwärmt. Unter lebhaftem Rühren tropft man in ca. 1 Stunde 50 g Acroleincyanhydrinpropionat zu, das 4 g t-Butylperoctoat enthält. Nach beendetem Zutropfen wird noch 15 min bei 120 °C nachgerührt. Anschließend wird der überschüssige Methanphosphonigsäuremonoisobutylester unter vermindertem Druck entfernt und danach der Rückstand unter Hochvakuum destilliert. Bei 178-184 °C/0,66 mbar destillieren 94 g (3-Propionyloxi-3-cyano-propyl)-methyl-phosphinsäureisobutylester, entsprechend einer Ausbeute von 84,5 % d. Th.

Analyse : $C_{12}H_{22}O_4NP$ (M = 275,3)
ber. : C 51,4 % ; H 8,1 % ; N 5,1 % ; P 11,3 %
gef. : C 52,4 % ; H 8,1 % ; N 5,5 % ; P 11,8 %

**Ansprüche**

1. Verfahren zur Herstellung von Verbindungen der allgemeinen Formel I

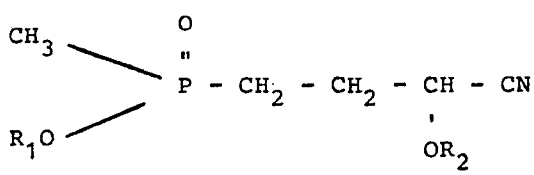

(I)

worin

$R_1$ $(C_1\text{-}C_6)$-Alkyl und

$R_2$ Wasserstoff, Acetyl oder Propionyl bedeuten, dadurch gekennzeichnet, daß man Verbindungen der allgemeinen Formel II

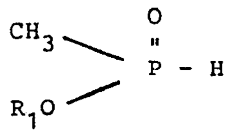

(II)

mit Verbindungen der allgemeinen Formel III

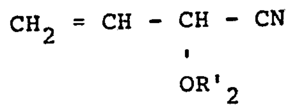

(III)

worin $R'_2$ Acetyl oder Propionyl bedeutet, in Gegenwart katalytischer Mengen von Radikalbildnern umsetzt und gewünschtenfalls in den erhaltenen Verbindungen den Rest $R'_2$ in an sich bekannter Weise abspaltet.

2. Verbindungen der Formel I.

**Claims**

1. A process for preparing compounds of the general formula I

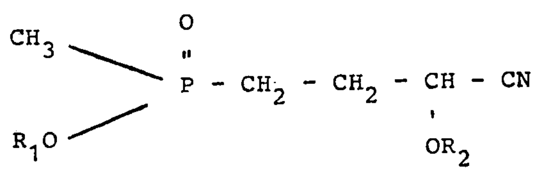

(I)

in which

$R_1$ is $(C_1\text{-}C_6)$-Alkyl and

$R_2$ is hydrogen, acetyl or propionyl,

which comprises reacting compounds of the general formula II

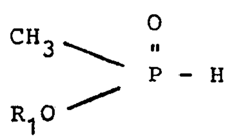

(II)

with compounds of the general formula III

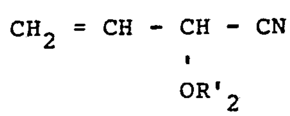

(III)

in which $R'_2$ is acetyl or propionyl in the presence of catalytical amounts of free radical-forming agents, and optionally splitting off the radical $R'_2$ in the compounds obtained.

2. Compounds of formula I.

**Revendications**

1. Procédé de préparation de composés répondant à la formule générale (I)

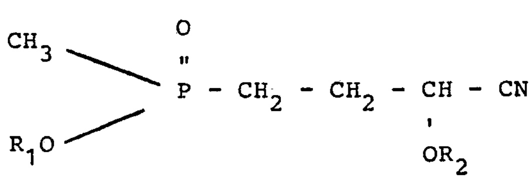

(I)

dans laquelle

$R_1$ représente un radical alkyle contenant de 1 à 6 atomes de carbone et

$R_2$ représente l'hydrogène ou un radical acétyle ou propionyle,

procédé caractérisé en ce qu'on fait réagir des composés répondant à la formule générale (II)

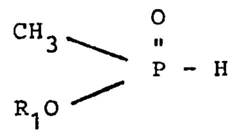

(II)

avec des composés répondant à la formule générale (III)

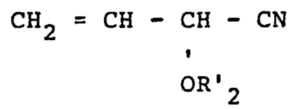

(III)

dans laquelle $R'_2$ représente un radical acétyle ou propionyle, en présence de quantités catalytiques de générateurs de radicaux, et, dans les composés obtenus, on élimine, si on le désire, le radical $R'_2$ de manière connue.

2. Composés répondant à la formule (I).